# EUROPEAN PATENT SPECIFICATION

(11) **EP 3 032 957 B1**
(45) Date of publication and mention of the grant of the patent: **10.10.2018**
(21) Application number: 14725718.2
(22) Date of filing: 23.05.2014
(51) Int. Cl.: A23C 19/09

(54) **PROCESS FOR THE PREPARATION OF AN EXPANDED DAIRY PRODUCT AND PRODUCT OBTAINED THEREBY**
VERFAHREN ZUR HERSTELLUNG EINES EXPANDIERTEN MILCHPRODUKTS UND SO GEWONNENES PRODUKT
PROCÉDÉ DE PRÉPARATION D'UN PRODUIT LAITIER GONFLÉ ET PRODUIT OBTENU AU MOYEN DUDIT PROCÉDÉ

(30) Priority: 13.08.2013 IT LO20130004
(43) Date of publication of application: 22.06.2016
(73) Proprietor: Olympia Srl, 26841 Casalpusterlengo (LO) (IT)
(72) Inventor: FANTINI, Luna, I-26843 Maccastorna (LO) (IT)
(74) Representative: Serravalle, Marco
(86) International application number: PCT/EP2014/060645
(87) International publication number: WO 2015/022096

(56) References cited:
- EP-A1- 1 614 355
- WO-A1-2013/104749
- DE-A1- 19 541 205
- FR-A1- 2 750 015
- US-A- 4 803 090
- US-A1- 2008 179 318

## Description

The present invention is directed to a process for the preparation of an expanded dairy product. More particularly, the process allows the production of pieces with a largest dimension of at least 1 cm, preferably of at least 2 cm, more preferably of at least 5 cm.

In recent decades the snacks and bites market, which represent for kids and teens the fastest and easiest way to get a bite or a snack, has grown enormously. This phenomenon was increased further by the diffusion of vending machines in schools and in the workplace.

Obesity in adolescence is an increasing problem and it is often linked to the increasing use of snacks and bites which present a high content of fats and carbohydrates and a low protein content. It is therefore a very felt problem to replace snacks and bites having low nutritional value with snacks and bites having higher protein content.

**.** FR 2 750 015 discloses a process for the preparation of expanded dairy products by subjecting curds' grains or cheese, e.g. mimolette, to microwave treatment with low power (600 W) and under reduced pressure (0.6 bar).

**.** EP 1 614 355 describes a granular dairy product obtained from hard cheeses by treatment of the cheeses itself with microwaves. The starting cheese is finely divided, and different shapes can be obtained by using molds in which the grinded cheese is placed before being subjected to microwaves. However, the pieces obtained by this process are characterized by considerable friability and fragility which can lead to a considerable fragmentation during the packaging period. Moreover, as described in the patent, the molds are soiled by the cheese grease which melts during the processing and they therefore need to be cleaned between one mold and the subsequent, in addition to causing a loss of food material.

**.** The use of a grinded product may lead to a greater difficulty in product traceability. In fact, during the process, different batches of the same product may be mixed, or different products may be mixed and therefore lead to lower security and certainty on the quality and type of the product used.

**.** Therefore, there is a problem of finding an alternative to the system described in EP 1 614 355 which allows the production of pieces of expanded dairy product having higher breaking strength and a productive standard more connected to the homogeneity of the product originally used. These properties, in addition of being a warranty of a better product preservation, also represent a quality from the point of view of the consumer who appreciates the consistence on the palate, the taste uniformity and the traceability from the source.

**.** The present invention is thus directed to a process for the preparation of an expanded dairy product obtainable directly from a piece of seasoned cheese, seasoned for at least 6 months. The process consists in subjecting a piece of cheese to a microwave oven processing, which piece of cheese is obtained by cutting a wheel of hard cheese at a distance from the outer edge of the crust comprised between 1 mm and 2 cm, followed by cooling with air. The distance from the outer edge of the crust is chosen to have a combination of capacity of the cheese to expand together with adequate mechanical strength.

**.** Seasoned cheeses suitable for the use in the present invention are seasoned for at least 6 months, for example: Grana Padano, Parmigiano Reggiano, Tipico Lodigiano, Pecorino, and all cheeses of the family of Grana, etc.

**.** Depending on the type of seasoned cheese used and on its seasoning, the distance from the outer edge of the crust varies in a range comprised between 1 mm and 2 cm. For example, in a 20 months seasoned Grana Padano the distance is preferably comprised between 2 and 4 mm. The seasoned cheese for use in the present invention is a hard cheese seasoned for 6 months or more.

**.** For a piece of 8 months seasoned Tipico Lodigiano the distance from the outer edge will be preferably comprised between 1 and 3 mm.

**.** The piece of cheese so cut, deprived of the outer part of the crust, with a humidity content lower than or equal to 45%, is subjected to a microwave oven processing until an expanded product with a humidity content preferably lower than 10% is obtained. The power of the microwave oven is preferably comprised between 400 and 1.700 watt, better between 800 and 1.500 watt, and the duration of treatment is preferably comprised between 25 and 360 seconds.

**.** The piece, coming from the treatment by microwave, is cooled by forced air in temperature reducer. The air utilized has a temperature preferably comprised between 0° and -40°C, more preferably between 0° and -20°C. The period of treatment may vary in a wide range, preferably it is comprised between 60 and 300 seconds. At cooling completed, the expanded product is stored prior to its packaging.

**.** The final expanded product humidity content is preferably lower than 10%. More preferably is comprised between 2 and 7%.

**.** The microwave treatment can also be performed in an oven under vacuum.

**.** During the microwave treatment the water molecules contained in the cheese evaporate. In this way it is possible to control the energy supply so that the organoleptic and nutritional properties of the product are not damaged.

**.** Calorimetric, organoleptic and nutritional features of the expanded product show that the product is correct from the nutritional point of view (40% of unsaturated fats and only 70 mg of cholesterol in 50 gr: 384 Kcal for 100 gr of expanded product).

**.** By its high protein value, with 33% of protein and the total absence of sugar and carbohydrates, its use is recommended to sportsmen for the high intake of mineral salts and vitamins, also recommended to teens and seniors in physical and psychological stress situations and in both protein diets and food combining diets or other low-calories diets, as it does not stimulate, by the absence of carbohydrates, the production of insulin which promotes the transformation of the carbohydrate into adipose cell.

**.** A daily intake of 20-30 g of expanded Grana Padano Lodigiano cheese perfectly integrates every diet, fighting cellular aging by its high phosphates, iodine and selenium content.

**.** Recently a study has been implemented, showing a positive effect on blood pressure, due to *Lactobacillus Helveticus* which develops itself during the preparation of the cheese; it appears that this effect is similar to ace inhibitors and sartans (antihypertensive drugs).

### Production process

**.** The apical and bottom discs of the hard cheese wheel, being it Grana Padano or Tipico Lodigiano cheese starting from 6 months seasoning or more, are subjected to a milling process of the outer part of the crust with the removal of the first external 3-5 mm. The same process can be applied to the lateral cover part of the cheese wheel. Once the outer part is removed, the disc or the lateral part is subjected to punching which creates sticks of 8 cm length, 8 mm width and 5 mm thickness.

**.** The product so divided can be placed on a silpack carpet or on a teflon mold and then go to the cooking step. The cooking occurs in a microwave oven at a power of 1.100 watt at 100% for 3 minutes. At the moment of the picking up, the temperature reached by the oven is about 137°C.

**.** The product is directly placed in a temperature reducer with forced air at - 14°C for 5 minutes, until the product reaches a temperature of 3°C.

| | Expanded product from Tipico Lodigiano cheese | Expanded product from Grana Padano cheese | Grana Padano cheese |
|---|---|---|---|
| Total Fats | 30% | 38% | 28% |
| Unsaturated Fats | 11% | 14% | |
| Saturated Fats | 19% | 24% | |
| Proteins | 49% | 48% | 33% |
| Carbohydrates | 13% | 6% | 3% |
| Humidity | 3% | 2% | 30% |
| Ashes | 5% | 6% | 6% |
| Energy Value | 518 kcal/100 g | 556 kcal/100 g | 390 kcal/100 g |

### Second production process

Starting from a wheel of Parmigiano Reggiano hard cheese or any other type of hard cheese like Pecorino, Sbrintz, etc., the apical and the bottom discs are subjected to a milling process of the outer part of the crust with the removal of the first external 4 mm. The same process is applied to the lateral cover part of the cheese wheel. Once the outer part is removed, the disc or the lateral part is subjected to punching which creates sticks of 2 cm length, 8 mm width and 5 mm thickness. The so divided product is placed on a silpack carpet or in a Teflon containing mold and placed in a microwave oven for baking at a power of 1.400 watt at 100% for 2 minutes. At the moment of the picking up, the temperature reached by the oven is of about 158°C. The product is directly placed in a temperature reducer with forced air at -17°C for 5 minutes, until the product reaches the temperature of 5°C.

## Claims

1. Process for preparing an expanded dairy product directly from a piece of hard cheese seasoned for 6 months or more, the process consisting of:
a. cutting a piece of cheese from a wheel of hard cheese at a distance from the outer edge of the crust comprised between 1 mm and 2 cm;
b. subjecting the piece of cheese to microwave oven processing until an expanded product is obtained; and
c. cooling the expanded product with air;
wherein the expanded product has a largest dimension of at least 1 cm.

2. A process according to claim 1, wherein the seasoned cheese is selected from Grana Padano, Parmigiano Reggiano, Tipico Lodigiano, Pecorino and Sbrinz.

3. A process according to claim 2, wherein the cheese is Grana Padano or Parmigiano Reggiano and the distance from the outer edge of the crust is 2-4 mm, or Tipico Lodigiano and the distance from the outer edge of the crust is 1-3 mm.

4. A process according to claims 1-3 wherein the microwave oven has a power between 400 and 1700 W, preferably between 800 and 1500 W.

5. A process according claims 1-4 wherein the cooling air has a temperature comprised between - 40°C and 0°C.

6. A process according to claims from 1 to 5 wherein the treatment in the microwave oven lasts between 25 s and 360 s.

7. A process according to claims from 1 to 6 where the treatment with cooling air lasts between 60 s and 300 s.

8. A process according to claims 1-7, wherein the water content of the expanded dairy product is lower than 10 weight %.

9. A process according to claim 8, wherein the water content is comprised between 2 and 7 weight %.

## Patentansprüche

1. Verfahren zur Herstellung eines ausgedehnten Milcherzeugnisses direkt aus einem Stück eines 6 Monate lang oder länger gereiften Hartkäses, wobei das Verfahren folgendes aufweist:
a) Schneiden eines Käsestücks von einem Hartkäselaib mit einem Abstand vom äußeren Rand der Rinde zwischen 1 mm und 2 cm;
b) Unterziehen des Käsestücks einer Mikrowellenverarbeitung, bis ein ausgedehntes Erzeugnis erhalten wird; und
c) Abkühlen des ausgedehnten Erzeugnisses mit Luft;
wobei das ausgedehnte Erzeugnis eine größte Abmessung von mindestens 1 cm aufweist.

2. Verfahren nach Anspruch 1, wobei der gereifte Käse ausgewählt ist aus Grana Padano, Parmigiano Reggiano, Tipico Lodigiano, Pecorino und Sbrinz.

3. Verfahren nach Anspruch 2, wobei der Käse Grana Padano oder Parmigiano Reggiano ist, und wobei der Abstand von dem äußeren Rand der Rinde 2 bis 4 mm beträgt, oder wobei der Käse Tipico Lodigiano ist und der Abstand von dem äußeren Rand der Rinde 1 bis 3 mm beträgt.

4. Verfahren nach einem der Ansprüche 1 bis 3, wobei der Mikrowellenofen eine Leistung zwischen 400 und 1700 W aufweist, vorzugsweise zwischen 800 und 1500 W.

5. Verfahren nach einem der Ansprüche 1 bis 4, wobei die kühlende Luft eine Temperatur zwischen -40 °C und 0 °C aufweist.

6. Verfahren nach einem der Ansprüche 1 bis 5, wobei die Behandlung in dem Mikrowellenofen 25 s bis 360 s dauert.

7. Verfahren nach einem der Ansprüche 1 bis 6, wobei die Behandlung mit kühlender Luft 60 s bis 300 s dauert.

8. Verfahren nach einem der Ansprüche 1 bis 7, wobei der Wasseranteil des ausgedehnten Milcherzeugnisses geringer ist als 10 Gew.-%.

9. Verfahren nach Anspruch 8, wobei der Wasseranteil zwischen 2 und 7 Gew.-% liegt.

## Revendications

1. Procédé de préparation d'un produit laitier gonflé directement à partir d'un morceau de fromage dur séché pendant 6 mois ou plus, le procédé consistant à :
a. couper un morceau de fromage à partir d'une meule de fromage dur à une distance par rapport au bord externe de la croûte comprise entre 1 mm et 2 cm ;
b. soumettre le morceau de fromage à un traitement au four à micro-ondes jusqu'à ce qu'un produit gonflé soit obtenu ;
c. refroidir à l'air le produit gonflé ;
le produit gonflé ayant une dimension la plus grande d'au moins 1 cm.

2. Procédé selon la revendication 1, dans lequel le fromage séché est choisi parmi Grana Padano, Parmigiano Reggiano, Tipico Lodigiano, Pecorino et Sbrinz.

3. Procédé selon la revendication 2, dans lequel le fromage est Grana Padano ou Parmigiano Reggiano et la distance par rapport au bord externe de la croûte est comprise entre 2 et 4 mm, ou Tipico Lodigiano et la distance par rapport au bord externe de la croûte est comprise entre 1 et 3 mm.

4. Procédé selon les revendications 1 à 3, dans lequel le four à micro-ondes a une puissance comprise entre 400 et 1700 W, de préférence entre 800 et 1500 W.

5. Procédé selon les revendications 1 à 4, dans lequel l'air de refroidissement a une température comprise entre -40 °C et 0 °C.

6. Procédé selon les revendications 1 à 5, dans lequel le traitement dans le four à micro-ondes dure entre 25 s et 360 s.

7. Procédé selon les revendications 1 à 6, dans lequel le traitement à l'air de refroidissement dure entre 60 s et 300 s.

8. Procédé selon les revendications 1 à 7, dans lequel la teneur en eau du produit laitier gonflé est inférieure à 10 % en poids.

9. Procédé selon la revendication 8, dans lequel la teneur en eau est comprise entre 2 et 7 % en poids.
